**Europäisches Patentamt**

**European Patent Office**

**Office européen des brevets**

(19)

(11) Veröffentlichungsnummer: **0 182 183**
**B1**

## EUROPÄISCHE PATENTSCHRIFT

(12)

(45) Veröffentlichungstag der Patentschrift:
**11.05.88**

(21) Anmeldenummer: **85113998.0**

(22) Anmeldetag: **04.11.85**

(51) Int. Cl.⁴: **A 01 D 17/10, B 65 G 15/52**

(54) Siebband für eine Hackfrucht-Erntemaschine.

(30) Priorität: **08.11.84 DE 3440831**

(43) Veröffentlichungstag der Anmeldung:
**28.05.86 Patentblatt 86/22**

(45) Bekanntmachung des Hinweises auf die Patenterteilung:
**11.05.88 Patentblatt 88/19**

(84) Benannte Vertragsstaaten:
**BE CH DE FR GB IT LI NL**

(56) Entgegenhaltungen:
**DE - A - 3 109 209**
**FR - A - 2 410 949**
**NL - A - 8 100 489**

(73) Patentinhaber: **A.J. Tröster GmbH + Co KG,**
**Kaiserstrasse 9-11, D-6308 Butzbach (DE)**

(72) Erfinder: **Link, Alfred, Ing. grad., Alte Brauerei 1,**
**D-6308 Butzbach (DE)**

(74) Vertreter: **Schlagwein, Udo, Dipl.-Ing., Anwaltsbüro**
**Ruppert & Schlagwein Bahnhofsallee 11, D-6350 Bad**
**Nauheim (DE)**

**Beschreibung**

Die Erfindung bezieht sich auf ein endloses Siebband für eine Hackfrucht-Erntemaschine, welches zwei seitliche Riemen hat, die durch auf der Riemenaussenseite festgenietete Querstäbe miteinander verbunden sind und innenseitig mit gleichmässiger Teilung nach innen gerichtete Mitnahmestollen zwecks Eingriff in das Siebband umlenkende Mitnehmerscheiben aufweisen. Ein solches Siebband ist beispielsweise in der DE-A-31 09 209 beschrieben.

Vor allem in Kartoffelerntemaschinen finden endlose, umlaufende Siebbänder dieser Art Anwendung. Sie übernehmen den aus Erdreich und Kartoffeln bestehenden Damm aus dem Boden, sieben Erdreich und mit aufgenommenen kleinen Steine ab und fördern die Kartoffeln mitsamt ihrem Kraut in die Erntemaschine hinein. Zur hinteren Umlenkung dienen Umlenkwalzen, die gemäss der eingangs genannten DE-A-31 09 209 elastisch sind. Die rückwärtige Umlenkwalze weist an beiden Seiten eine Mitnehmerscheibe auf, welche mit Stegen zwischen den Mitnahmestollen des jeweiligen Riemens zu greifen vermag und dadurch das Siebband formschlüssig mitnimmt.

Um die Querstäbe mit den Riemen vernieten zu können, müssen die Nietlöcher jeweils zwischen zwei Mitnahmestollen durch die Riemen führen. Die Querstäbe befinden sich deshalb jeweils oberhalb der Lücken zwischen den Mitnahmestollen oder auch oberhalb jeder zweiten oder mehrfachen Mitnahmestollenlücke. Auf jeden Fall kann die Teilung der Querstäbe nur genau der Teilung der Mitnahmestollen oder ein Mehrfaches von ihr entsprechen.

Unterschiedliche Erntebedingungen, insbesondere hervorgerufen durch besonders feuchte oder trockene Witterungsperioden machen es erforderlich, das Siebband gegen ein solches mit einer Querstabteilung auszutauschen, die nicht mehr der Teilung der Mitnahmestollen entspricht. Es wird dann erforderlich, zusätzlich zum Siebband auch die Mitnehmerscheiben auszuwechseln. Das ist oftmals recht arbeitsaufwendig, da die Mitnehmerscheiben meist schlecht zugänglich sind und infolge von Verschmutzung oder Korrosion nur schwer gelöst werden können.

Um dieses Austauschen der Mitnehmerscheiben einzusparen, lehrt die genannte DE-A-31 09 209, für solche Fälle Siebbänder mit innenseitig ebenen Riemen zu verwenden, so dass die Antriebskraft ausschliesslich durch Reibschluss übertragen wird. Dadurch werden zwar Mitnehmerscheiben überflüssig, so dass ein Wechsel des Siebbandes rascher vonstatten gehen kann, jedoch kommt es sehr leicht dazu, dass das Siebband nicht von der Antriebswalze mitgenommen wird oder ein ständiger Schlupf zwischen Siebband und Antriebswalze besteht. Deshalb verzichtet man in der Praxis nicht auf den Formschluss zwischen Siebband und der Antriebswalze.

Der Erfindung liegt die Aufgabe zugrunde, ein Siebband der eingangs genannten Art zu entwickeln, dessen Querstabteilung unabhängig von der Teilung der Mitnahmestollen gewählt werden kann.

Diese Aufgabe wird erfindungsgemäss dadurch gelöst, dass die Mitnahmestollen nur über einen Teilbereich der Breite jedes Riemens verlaufen und die Niete auf der Riemeninnenseite durch einen ebenen, über die gesamte Länge des Siebbandes keine Mitnahmestollen aufweisenden Riemenbereich geführt sind.

Durch diese erfindungsgemässe Gestaltung des Siebbandes stören die Mitnahmestollen niemals den Verlauf der Nietlöcher. Die Teilung der Querstäbe kann deshalb ohne Rücksicht auf die Teilung der Mitnahmestollen gewählt werden. Siebbänder mit unterschiedlicher Querstabteilung können deshalb eine stets gleiche Teilung der Mitnahmestollen aufweisen, so dass die Siebbänder ausgetauscht werden können, ohne dass es erforderlich wird, auch die Mitnehmerscheiben auszuwechseln.

Eine vorteilhafte Ausgestaltung der Erfindung besteht darin, dass die Mitnahmestollen an beiden Seiten des Riemens vorgesehen sind und zwischen den Mitnahmestollen der ebene, die Niete aufweisende Riemenbereich verläuft. Bei einer solchen Ausführungsform ist der jeweilige Riemen beidseitig mit seinen Mitnahmestollen im Eingriff mit der Mitnehmerscheibe, so dass es nicht zu Verwindungen kommen kann.

Ganz besonders vorteilhaft ist es, wenn die Querstäbe riemenaussenseitig in diese bündig einfassende Riemenausnehmungen eingesetzt sind. Diese Ausnehmungen halten die Querstäbe in Längsrichtung des Siebbandes fest, so dass die Nietung nur noch geringe Kräfte übertragen muss. Es genügt dann, an jedem Querstabende nur eine Niet vorzusehen, so dass der ebene Bereich zwischen den Mitnahmestollen schmal sein kann.

Eine alternative Ausführungsform, die eine Vernietung mit zwei Nieten ermöglicht, besteht darin, dass die Mitnahmestollen in der Mitte des Riemens vorgesehen sind und zu beiden Seiten davon jeweils ein ebener, die Niete aufweisender Riemenbereich verläuft.

Günstig ist es auch, wenn die Oberseite des Riemens zwischen den Querstäben Querrippen aufweist. Dadurch kann erreicht werden, dass auch auf den Riemen liegendes Gut zuverlässig gefördert wird.

Die Erfindung lässt zahlreiche Ausführungsformen zu. Zur Verdeutlichung ihres Grundprinzips ist eine davon in der Zeichnung dargestellt und wird nachfolgend beschrieben.

Die Zeichnung zeigt in

Fig. 1 eine Draufsicht auf einen Teilbereich eines erfindungsgemäss gestalteten Siebbandes,

Fig. 2 einen Blick auf einen Riemen des Siebbandes, von der Siebbandmitte aus gesehen,

Fig. 3 eine Ansicht von unten auf einen Teilbereich des Siebbandes nach den Figuren 1 und 2.

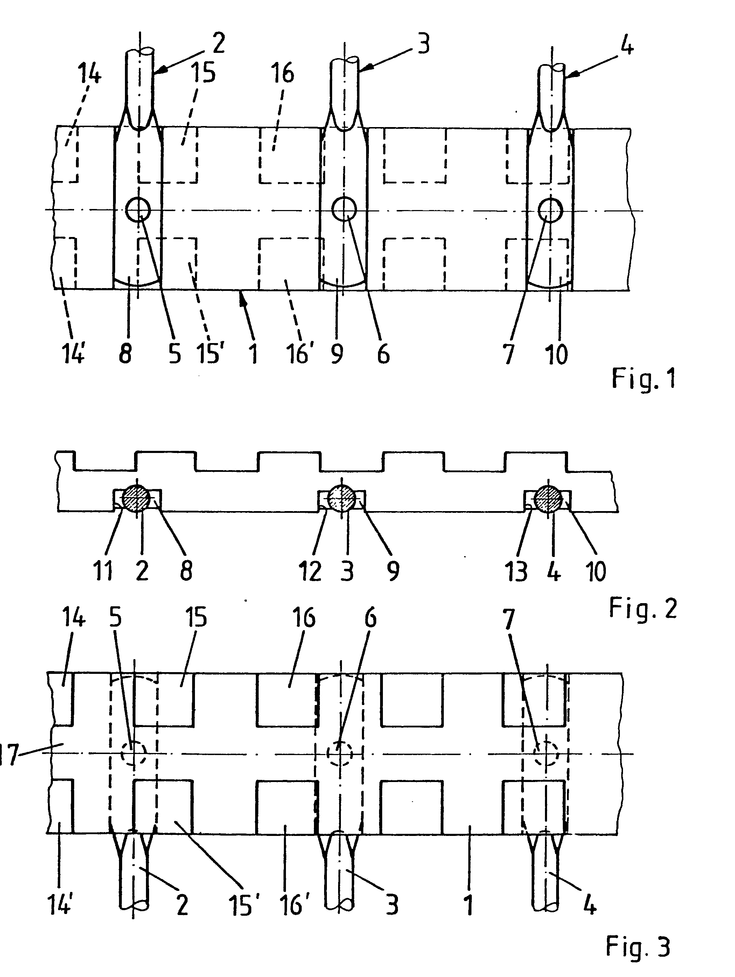

Die Figur 1 zeigt von einem Siebband einen Teil eines endlosen Riemens 1, auf dem von oben her Querstäbe 2, 3, 4 durch jeweils eine durch den Riemen 1 geführte Niet 5, 6, 7 befestigt sind. Wie die Figur 2 erkennen lässt, sitzen die Querstäbe 2, 3, 4 mit jeweils einem flachen Endstück 8, 9, 10 bündig in einer entsprechenden Ausnehmung 11, 12, 13 des Riemens 1.

Auf der den Querstäben 2, 3, 4 gegenüberliegenden Seite hat der Riemen 1 Mitnahmestollen, zum Beispiel die Mitnahmestollen 14, 15, 16; 14', 15', 16' in die eine nicht gezeigte Mitnehmerscheibe zu greifen vermag. Ein Blick auf die Figur 3 zeigt, dass die Mitnahmestollen 14, 14'; 15, 15'; 16, 16' paarweise an beiden Seiten des Riemens 1 derart angeordnet sind, dass über die gesamte Länge des Riemens 1 in der Mitte zwischen den Mitnahmestollen 14, 14'; 15, 15'; 16, 16' ein ebener Riemenbereich 17 verbleibt, durch den die Niete 5, 6, 7 geführt sind. Deshalb kann die Teilung der Querstäbe 2, 3, 4 völlig unabhängig von der Teilung der Mitnahmestollen 14, 15, 16; 14', 15', 16' gewählt werden, da diese nicht die Niete 5, 6, 7 stören.

Nicht dargestellt ist, dass die Oberseite der Riemen 1 zwischen den Querstäben Querrippen aufweisen kann, damit auf den Riemen 1 liegendes Gut besser gefördert wird.

*Auflistung der verwendeten Bezugszeichen*

1    Riemen
2    Querstab
3    Querstab
4    Querstab
5    Niet
6    Niet
7    Niet
8    Endstück
9    Endstück
10   Endstück
11   Ausnehmung
12   Ausnehmung
13   Ausnehmung
14   Mitnahmestollen
15   Mitnahmestollen
16   Mitnahmestollen
17   ebener Riemenbereich

**Patentansprüche**

1. Endloses Siebband für eine Hackfruchterntemaschine, welches zwei seitliche Riemen (1) hat, die durch auf der Riemenaussenseite festgenietete Querstäbe (2-4) miteinander verbunden sind und innenseitig mit gleichmässiger Teilung nach innen gerichtete Mitnahmestollen (14-16) zwecks Eingriff in das Siebband umlenkende Mitnehmerscheiben aufweisen, dadurch gekennzeichnet, dass die Mitnahmestollen (14, 15, 16; 14', 15', 16') nur über einen Teilbereich der Breite jedes Riemens (1) verlaufen und die Niete (5, 6, 7) auf der Riemeninnenseite durch einen ebenen, über die gesamte Länge des Siebbandes keine Mitnahmestollen (14, 15, 16; 14', 15', 16') aufweisenden Riemenbereich (17) geführt sind.

2. Siebband nach Anspruch 1, dadurch gekennzeichnet, dass die Mitnahmestollen (14, 15, 16; 14', 15', 16') an beiden Seiten des Riemens (1) vorgesehen sind und zwischen den Mitnahmestollen (14, 15, 16; 14', 15', 16') der ebene, die Niete (4, 5, 6) aufweisende Riemenbereich (17) verläuft.

3. Siebband nach Anspruch 1 oder 2, dadurch gekennzeichnet, dass die Querstäbe (2, 3, 4) riemenaussenseitig in diese bündig einfassende Ausnehmungen (11, 12, 13) eingesetzt sind.

4. Siebband nach Anspruch 1 oder 3, sofern Anspruch 3 nur auf Anspruch 1 rückbezogen ist, dadurch gekennzeichnet, dass die Mitnahmestollen in der Mitte des Riemens (1) vorgesehen sind und zu beiden Seiten davon jeweils ein ebener, die Niete (4, 5, 6) aufweisender Riemenbereich verläuft.

5. Siebband nach Anspruch 1 oder einem der folgenden, dadurch gekennzeichnet, dass die Oberseite des Riemens (1) zwischen den Querstäben (2, 3, 4) Querrippen aufweist.

**Claims**

1. An endless belt chain for root crop harvesters, comprising two lateral belts (1) which are connected to each other by means of crossrods (2-4) riveted to the outside of the belts and which on the inside have uniformly-spaced, inwardly-directed entrained cleats (14-16) whose purpose is to engage entrainer disks which deflect into the belt chain, characterized in that the entrained cleats (14, 15, 16; 14', 15', 16') run only over a subregion of the width of each belt (1), and the rivets (5, 6, 7) are passed on the inside of the belt through a flat region of the belt (17) having no entrained cleats (14, 15, 16; 14', 15', 16') throughout the entire length of the belt chain.

2. Belt chain according to claim 1, characterized in that the entrained cleats (14, 15, 16; 14', 15', 16') are provided on both sides of the belt (1), and the flat region of the belt (17) having the rivets passes between the entrained cleats (14, 15, 16; 14', 15', 16').

3. Belt chain according to claim 1 or 2, characterized in that the crossrods (2, 3, 4) are inserted on the outside of the belt into recesses (11, 12, 13) flushly bordering them.

4. Belt chain according to claim 1 or 3, as far as claim 3 only refers to claim 1, characterized in that the entrained cleats are provided in the middle of the belt (1) and on both sides thereof there passes a flat region of the belt having the rivets (4, 5, 6).

5. Belt chain according to claim 1 or one of the following claims, characterized in that the top of the belt (1) has crossribs between the crossrods (2, 3, 4).

**Revendications**

1. Tapis cribleur sans fin pour machine à récolter des plantes sarclées, qui comporte deux courroies latérales (1), qui sont reliées entre elles par des barreaux transversaux (2-4) rivetés de manière fixe sur le côté extérieur de la bande et qui présentent du côté intérieur des nervures d'entraînement (14-16) dirigées vers l'intérieur et espacées régulièrement, pour venir en prise avec des disques entraîneurs faisant tourner le tapis cribleur, caractérisé en ce que les nervures d'entraînement (14, 15, 16; 14', 15', 16') ne s'étendent que sur une partie de la largeur de chaque courroie (1) et que les rivets (5, 6, 7) sur le côté intérieur de la courroie sont guidés au travers d'une zone de courroie (17) plane, ne présentant sur toute la longueur du tapis cribleur aucune nervure d'entraînement (14, 15, 16; 14', 15', 16').

2. Tapis cribleur selon la revendication 1, caractérisé en ce que les nervures d'entraînement (14, 15, 16; 14', 15', 16') sont ménagées sur les deux côtés de la courroie (1) et que entre les nervures d'entraînement (14, 15, 16; 14', 15', 16') s'étende la zone de courroie (17) plane, qui comporte les rivets (4, 5, 6).

3. Tapis cribleur selon la revendication 1 ou 2, caractérisé en ce que les barreaux transversaux (2, 3, 4) sont logés du côté extérieur de la courroie dans des évidements (11, 12, 13) où ils sont enchassés à affleurement.

4. Tapis cribleur selon la revendication 1 ou 3, dans la limite où la revendication 3 ne se rattache qu'à la revendication 1, caractérisé en ce que les nervures d'entraînement sont disposées au milieu de la courroie (1) et que des deux côtés de celles-ci s'étende à chaque fois une zone de courroie plane, présentant les rivets (4, 5, 6).

5. Tapis cribleur selon la revendication 1 ou l'une des suivantes, caractérisé en ce que la partie supérieure de la courroie (1) entre les barreaux transversaux (2, 3, 4) présente des nervures transversales.

Fig. 1

Fig. 2

Fig. 3